# EUROPEAN PATENT SPECIFICATION

(11) **EP 1 870 517 B1**
(45) Date of publication and mention of the grant of the patent: **09.03.2016**
(21) Application number: 06730427.9
(22) Date of filing: 29.03.2006
(51) Int. Cl.: D21H 25/04, A47K 7/00, A47K 10/16, D21H 27/30, B32B 5/26

(54) **PAPER SHEET AND ITS BONDING METHOD**
PAPIERBOGEN UND SEIN BONDIERVERFAHREN
FEUILLE DE PAPIER ET SON PROCEDE DE LIAISON

(30) Priority: 31.03.2005 JP 2005104718
(43) Date of publication of application: 26.12.2007
(73) Proprietor: DAIO PAPER CORPORATION, Shikokuchuo-shi, Ehime 799-0492 (JP)
(72) Inventor: MURANAKA, Toshio c/o OMIYASEISHI KABUSHIKIGAISHA, Shizuoka 4180038 (JP); ONO, Hiroshi c/o OMIYASEISHI KABUSHIKIGAISHA, Shizuoka 4180038 (JP)
(74) Representative: Jehan, Robert
(86) International application number: PCT/JP2006/306479
(87) International publication number: WO 2006/106738

(56) References cited:
- JP-A- 03 108 590
- JP-A- 09 132 848
- JP-A- 10 501 435
- JP-A- 2001 523 595

## Description

### TECHNICAL FIELD

The present invention relates to a paper sheet and paper sheet bonding method.

### BACKGROUND ART

As toilet paper, tissue paper, kitchen paper, paper towel and the like, conventionally, there has been proposed a type of sheet produced by overlaying plural pieces of paper sheets having no thermally fusible component to integrate them in order to improve functionality such as durability, liquid permeation property and absorption property, so that this sheet is available as a single sheet (for example, a type of tissue paper in which two sheets are overlaid is called 2-ply).

As a method of manufacturing such an overlaid sheet, a method of forming fine holes like perforated line on paper sheets overlapped on each other and a method of overlaying paper sheets through adhesive agent or through no adhesive agent and performing no-heat or heat embossing is available (see for example, patent document 1).

However, the method of forming fine holes facilitate permeation of liquid due to existence of the holes penetrating the sheet and deteriorates the texture. The method of overlaying sheets through no adhesive agent and performing embossing has a problem that its bonding strength is weak. Further, the method of overlaying papers through adhesive agent and performing embossing increases material cost by an amount of the adhesive agent. Further, the heat embossing cannot avoid deterioration of the texture by heating.
Patent document 1: Japanese Patent Application Laid-Open No. 2002-347146

JP H-9-132848 describes a non-woven fabric used for unifying porous base materials by providing the non-woven fabric between the porous base materials of the same kind or different kinds and applying an ultrasonic wave thereto. The micro fibers with fiber diameter of 3 µm or less contained in the non-woven fabric makes it easy to put the micro fibers into the porous base materials for entangling so that the porous base materials can be easily unified with the non-woven fabric. JP H-9-132848 describes also a method for producing the non-woven fabric where fiber webs are bound, the fiber webs containing two or more resin components with split type fibers capable of being split into micro fibers, and simultaneously or subsequently, the split type fibers are split into the micro fibers. Thus, the non-woven fabric containing the micro fibers with high strength can be produced by the method so as to be used for easily unifying the porous base materials.

### DISCLOSURE OF THE INVENTION

### PROBLEM TO BE SOVED BY THE INVENTION

Accordingly, a main object of the present invention is to enable the paper sheets to be bonded together with a sufficient strength when bonding the paper sheets having no thermally fusible component, without formation of through holes, deterioration of the texture and increase of material cost.

### MEANS FOR SOLVING THE PROBLEM

The present invention which has solved the above-described problem is described in the appended claims.

According to a first aspect of the invention a paper sheet is provided in which a second paper sheet being produced using pulp fiber and having no thermally fusible component is bonded to a first paper sheet being produced using pulp fiber and having no thermally fusible component,
wherein fibers of the second paper sheet are made to enter mechanically between fibers of the first paper sheet by pressing the second paper sheet against the first paper sheet and applying ultrasonic wave to a pressed portion so as to accelerate crystallization of the fibers at the pressed portion where the first and second paper sheets are bonded together without thermal fusion and
a degree of gloss 75° (JIS P8142) at the bonding portion is 1.4 or more times larger than that of a non-bonding portion.

### (Operation)

If ultrasonic wave is transmitted to a pressed portion with a bonding portion of the paper sheet pressed, fibers of the second paper sheet enter mechanically between fibers of the first paper sheet so that both the sheets can be integrated without thermal fusion. Further, because crystallization of fibers at the bonding portion is accelerated, the bonding portion is supplied with gloss so as to improve the appearance. This principle is considerably different from ultrasonic wave fusion used in other fields than paper art and can achieve a sufficient strength while suppressing deterioration of the texture. Needless to say, formation of through holes or adhesive agent is not needed.

When the degree of gloss at the bonding portion is in the claimed range, the bonding portion is supplied with beautiful gloss so as to improve the appearance. In the meantime, "the degree of gloss 75°" means a degree of gloss measured by 75° gloss degree test stipulated by JIS P8142 and expresses an amount of reflection light at an output angle of 75° in percentage with respect to an amount of incident light when light is projected to an object portion at an incident angle of 75°.

Described is a paper sheet wherein a bonding portion is arranged in a pattern.

### (Operation)

Although according to the present invention, deterioration of the texture at the bonding portion is small, a change occurs in the texture as compared to a case where nothing is performed. Thus, it is preferable that providing the bonding portion in a pattern shape compensates for the partial change in the texture by entire functionality or functional beauty.

### (Operation)

According to a second aspect of the invention a method of bonding a second paper sheet being produced using pulp fiber and having no thermally fusible component to a first paper sheet being produced using pulp fiber and having no thermally fusible component is provided,
the method comprising: pressing the second paper sheet against the first paper sheet and applying ultrasonic wave to a pressed portion so that fibers of the second paper sheet enter mechanically between fibers of the first paper sheet so as to accelerate crystallization of the fibers at the pressed portion where the first and second paper sheets are bonded together without thermal fusion,
setting a linear pressure of the pressing to be 2 to 10 kgf/cm, a frequency of the ultrasonic wave to be 50 to 150 kHz and an amplitude of the ultrasonic wave to be 50 to 150 µm and
setting a degree of gloss 75° (JIS P8142) at the bonding portion to be 1. 4 or more times larger than that of a non-bonding portion.

### (Operation)

The same effect as the invention of the above first aspect is exerted.

Described is a paper sheet wherein a linear pressure of the pressing is 0.5 to 5.0 kgf/cm, a frequency of the ultrasonic wave is 17 to 100 kHz and an amplitude of the ultrasonic wave is 10 to 100 µm.

### (Operation)

If the linear pressure, frequency and amplitude are in this range when the bonding of the present invention is carried out, it is extremely advantageous.

### EFFECT OF THE INVENTION

As described above, the present invention enables paper sheets having no thermally fusible component to be bonded to each other with a sufficient strength without formation of through holes, deterioration of the texture and increase of material cost.

### BEST MODE FOR CARRYING OUT THE INVENTION

Hereinafter, the embodiment of the present invention will be described with reference to the accompanying drawings.

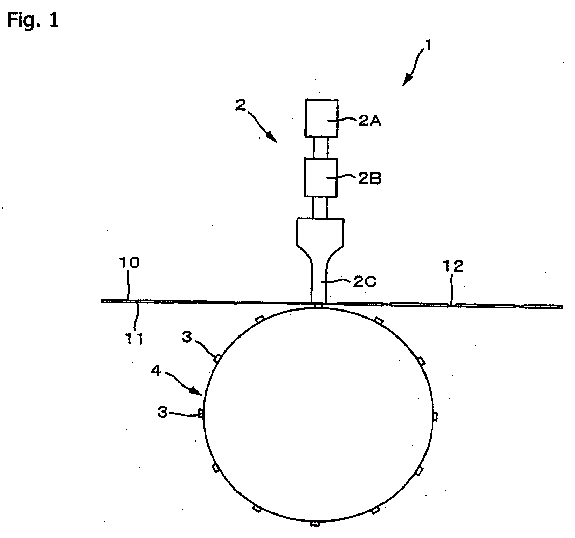

FIG. 1 shows an example of a paper sheet bonding apparatus 1, which comprises an anvil roll 4 having projecting portions 3, 3, ... formed in a predetermined pattern on its outer peripheral face and an ultrasonic wave applying portion 2 which makes a pressure contact with the projecting portions 3, 3, ... of the anvil roll 4. First paper sheet and second paper sheet 10, 11 are passed through between the ultrasonic wave applying portion 2 and the anvil roll 4 while they overlap each other.

The ultrasonic wave applying portion 2 is so constructed that ultrasonic wave vibration generated by the ultrasonic wave vibrator 2A is amplified (amplitude is enlarged) by an amplifying means called booster 2B and transmitted to an object by a means 2C called horn or cone. A drive current corresponding to an operation condition such as amplitude and frequency is supplied to the ultrasonic wave vibrator 2A through an oscillating circuit (not shown). The direction of the ultrasonic wave vibration may be determined appropriately corresponding to the type or installation position of the ultrasonic wave vibrator, as a direction along a plane of the paper sheets 10, 11, that is, a roll width direction and a direction perpendicular to or obliquely-crossed with the roll width direction.

To transmit ultrasonic wave energy to the paper sheets 10, 11 effectively, it is not preferable to use a material which absorbs vibration (such as rubber) for the anvil roll 4.

Although not shown, this apparatus 1 comprises a pressurizing means which pressurizes the horn 2C against the anvil roll 4 and a rotation driving means for the anvil roll 4. As the pressurizing means, a structure of freely pressing the horn 2C to the anvil roll 4 side with a driving source such as an air cylinder may be adopted. As the rotation driving means, a motor or the like may be used and it is preferable to make the rotation speed adjustable in order to adjust a press contact time.

Upon bonding together, the first and second paper sheets 10, 11 are passed through between the ultrasonic wave applying portion 2 (horn 2C thereof) and the anvil roll 4 of the bonding apparatus 1 while the paper sheets overlap each other. The first and second paper sheets 10, 11 are produced using pulp fiber such as NBKP and LBKP by adding softener, paper durability enhancing agent, pigment or the like and does not contain thermally fusible component such as thermally fusible fiber. The first and second paper sheets may be of the same material or of different materials.

The first and second paper sheets 10, 11 placed between the ultrasonic wave applying portion 2 and the anvil roll 4 are partially pressed by the projecting portions 3 of the anvil roll 4 while ultrasonic wave is transmitted to the press contact portion from the ultrasonic wave applying portion 2. Consequently, fibers are vibrated by the ultrasonic wave energy so that fibers of the second paper sheet 11 enter mechanically between the fibers of the first paper sheet 10 and thus, the press contact portions are integrated with each other without thermal fusion so as to form a bonding portion 12. Because the crystallization of fibers is accelerated at the bonding portion 12, the bonding portion is supplied with gloss, thereby providing an excellent appearance.

Preferably, the pressure of the press contact is 0.5 to 5.0 kgf/cm in terms of linear pressure and particularly 2.0 to 3.0 kgf/cm. This press contact pressure may be adjusted with a pressurizing means. If the press contact pressure is too low, bonding is likely to be insufficient, and if the press contact pressure is too high, the paper sheets 10 and 11 may be bored, or the sheet becomes easy to cut at the time of processing, or wearing of the horn or anvil roll is progressed easily, which is not preferable.

Preferably, the press contact speed (length of a sheet bonded per unit time) is 10 to 100 m/minute, particularly 50 to 100 m/minute. The press contact speed may be adjusted by a sheet feeding speed. If the press contact speed is too high, bonding is likely to be insufficient, and if it is too low, productivity drops or a bonding portion 12 is burnt, which is not preferable.

Preferably, the frequency of ultrasonic wave is in a range of 17 to 100 kHz and preferably, the amplitude of ultrasonic wave is in a range of 10 to 100 µm. If the frequency is too low, bonding becomes insufficient unless the press contact time is increased, and if the frequency is too high, processing is progressed excessively unless the press contact time is decreased, which is not preferable. If the amplitude is too low or too high, entering of fibers likely becomes insufficient, so that bonding is likely to be weak.

When the projecting portions 3 of the anvil roll 4 are provided in a pattern shape, the bonding portion 12 is formed corresponding to that pattern. Although this pattern can be determined appropriately, a pattern in which the dot-like bonding portions 12 are arranged in lateral and vertical directions or at random is preferred. The bonding portion 12 may be of any shape, for example, a diamond shape as shown in FIGS. 2 and 3 or an elliptic shape as shown in FIG. 4. A preferred dimensional example of the bonding portion 12 in these cases is 0.8 mm in maximum length a, 0.39 mm in minimum length b and 0.156 mm² in area and a preferred application example is 3.1 mm in long pitch A and 1.5 mm in short pitch B.

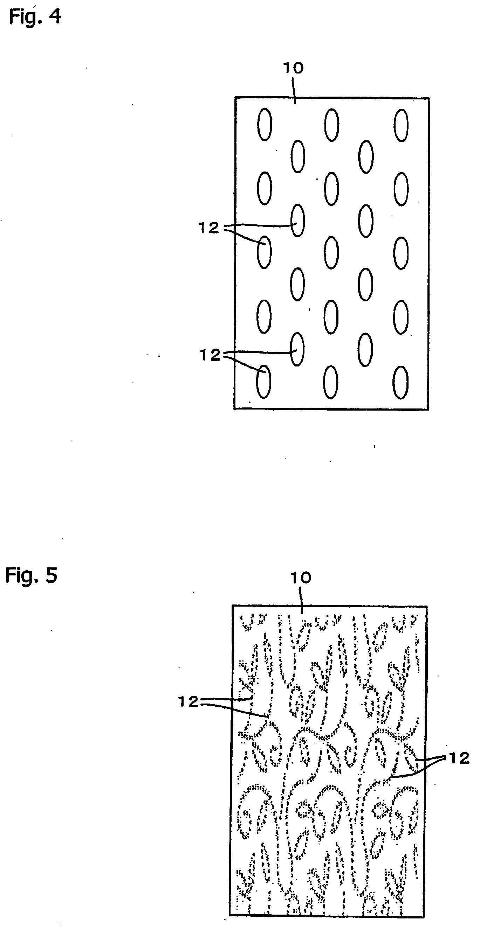

The bonding portion 12 may adopt a continuous linear pattern such as stripe pattern along a flow direction or a direction perpendicular thereto instead of the dot pattern. Further, the bonding portion 12 may be of picture-like shape as shown in FIG. 5 as well as of geometric pattern.

As another example, the entire surfaces of the sheets 10 and 11 may be formed into the bonding portion instead of providing the bonding portions 12, 12 ... partially.

### EXAMPLE

A sample of 2-ply (double layers) toilet paper was manufactured by ultrasonic wave bonding of the present invention by adjusting the linear pressure, ultrasonic wave frequency and amplitude, and a degree of gloss and bonding strength of the bonding portion were evaluated. Table 1 shows the result. In the Table, the degree of gloss of the bonding portion is a relative value when the degree of gloss of a non-bonding portion is assumed to be 100. As regards the bonding strength, "weak" means a bonding strength of an extent which allows sheets to be separated easily in a continuous usage process as toilet paper, and "strong" means a bonding strength of an extent which inhibits the sheets from being separated in a continuous usage process as toilet paper.

**[Table 1]**

| | Linear pressure (kgf/cm) | Frequency (kHz) | Amplitude (µm) | Degree of gloss | Bonding strength |
|---|---|---|---|---|---|
| Example 1 | 2 | 50 | 50 | 181 | strong |
| Example 2 | 5 | 100 | 100 | 198 | strong |
| Example 3 | 10 | 100 | 100 | 199 | strong |
| Example 4 | 5 | 150 | 100 | 192 | strong |
| Example 5 | 5 | 100 | 150 | 195 | strong |
| Example 6 | 0.1 | 50 | 50 | 103 | weak |
| Example 7 | 2 | 10 | 50 | 101 | weak |
| Example 8 | 2 | 50 | 5 | 105 | weak |

### INDUSTRIAL APPLICABILITY

The present invention can be applied to application for bonding plural pieces (not limited to two pieces) of papers as typified by toilet paper, tissue paper, kitchen paper, paper towel and the like.

### BRIEF DESCRIPTION OF THE DRAWINGS

[Fig. 1] Fig. 1 is a schematic diagram of a bonding apparatus.

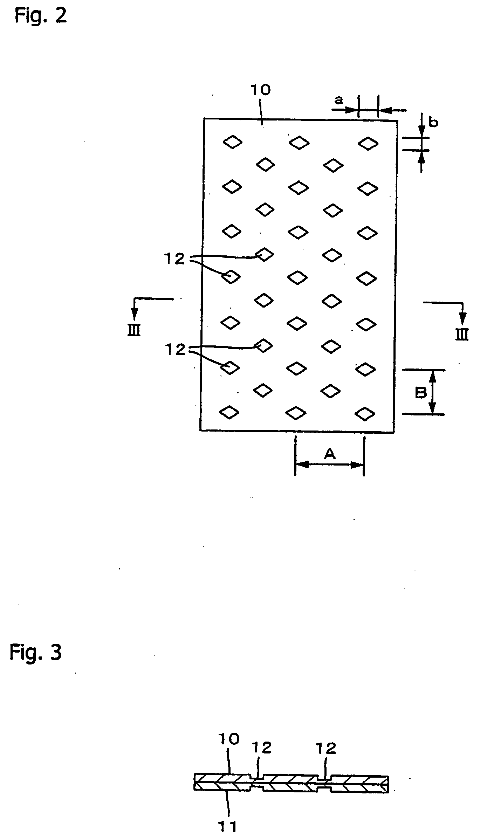

[Fig. 2] Fig. 2 is a plan view showing an example of a bonding pattern.
[Fig. 3] Fig. 3 is a sectional view taken along III-III of FIG. 2.
[Fig. 4] Fig. 4 is a plan view showing an example of a bonding pattern.
[Fig. 5] Fig. 5 is a plan view showing an example of a bonding pattern.

### DESCRIPTION OF REFERENCE NUMERALS

1: bonding apparatus, 2: ultrasonic wave applying portion, 3: projecting portion, 4: anvil roll, 10: first paper sheet, 11: second paper sheet, 12: bonding portion

## Claims

1. A paper sheet in which a second paper sheet being produced using pulp fiber and having no thermally fusible component is bonded to a first paper sheet being produced using pulp fiber and having no thermally fusible component,
wherein fibers of the second paper sheet are made to enter mechanically between fibers of the first paper sheet by pressing the second paper sheet against the first paper sheet and applying ultrasonic wave to a pressed portion so as to accelerate crystallization of the fibers at the pressed portion where the first and second paper sheets are bonded together without thermal fusion and
a degree of gloss 75° (JIS P8142) at the bonding portion is 1.4 or more times larger than that of a non-bonding portion.

2. The paper sheet according to claim 1 wherein a degree of gloss 75° (JIS P8142) at the bonding portion is 1.81 to 1.99 times larger than that of the non-bonding portion.

3. The paper sheet according to claim 1 or 2 wherein the bonding sheet is toilet paper, tissue paper, kitchen paper or paper towel

4. A method of bonding a second paper sheet being produced using pulp fiber and having no thermally fusible component to a first paper sheet being produced using pulp fiber and having no thermally fusible component,
the method comprising: pressing the second paper sheet against the first paper sheet and applying ultrasonic wave to a pressed portion so that fibers of the second paper sheet enter mechanically between fibers of the first paper sheet so as to accelerate crystallization of the fibers at the pressed portion where the first and second paper sheets are bonded together without thermal fusion,
setting a linear pressure of the pressing to be 2 to 10 kgf/cm, a frequency of the ultrasonic wave to be 50 to 150 kHz and an amplitude of the ultrasonic wave to be 50 to 150 µm and
setting a degree of gloss 75° (JIS P8142) at the bonding portion to be 1.4 or more times larger than that of a non-bonding portion.

5. The method of bonding the paper sheet according to claim 4 the method further comprising setting a press contact speed to be 50 to 100 m/minute.

## Patentansprüche

1. Papierbogen, in dem ein zweiter Papierbogen, der unter Verwendung von Pulpefaser hergestellt ist und keine thermisch schmelzbare Komponente aufweist, mit einem ersten Papierbogen verbunden ist, der unter Verwendung einer Pulpefaser hergestellt ist und keine thermisch schmelzbare Komponente aufweist,
wobei Fasern des zweiten Papierbogens so gefertigt werden, dass sie mechanisch zwischen die Fasern des ersten Papierbogens gelangen durch Pressen des zweiten Papierbogens gegen den ersten Papierbogen und Aufbringen einer Ultraschallwelle auf einen gepressten Abschnitt, um die Kristallisation der Fasern am gepressten Abschnitt zu beschleunigen, wo die ersten und zweiten Papierbögen miteinander ohne thermisches Verschmelzen miteinander verbunden werden und einen Glanzgrad 75° (JIS P8142) am bindenden Abschnitt 1,4 mal oder mehr größer ist als der eines nicht-bindenden Abschnitts.

2. Papierbogen nach Anspruch 1, wobei ein Glanzgrad 75° (JIS P8142) am bindenden Abschnitt von 1,81 bis 1,99 mal größer ist als der des nicht-bindenden Abschnitts.

3. Papierbogen nach Anspruch 1 oder 2, wobei der Bindungsbogen Toilettenpapier, Tissue-Papier, Küchenpapier oder ein Papierhandtuch ist.

4. Verfahren zum Bondieren eines zweiten Papierbogens, der unter Verwendung einer Pulpefaser hergestellt ist und keine thermisch schmelzbare Komponente aufweist, mit einem ersten Papierbogen, der unter Verwendung einer Pulpefaser hergestellt ist und keine thermisch schmelzbare Komponente aufweist,
wobei das Verfahren aufweist: Pressen des zweiten Papierbogens gegen den ersten Papierbogen und Aufbringen einer Ultraschallwelle auf einen gepressten Abschnitt, so dass die Fasern des zweiten Papierbogens mechanisch zwischen die Fasern des ersten Papierbogens gelangen, um eine Kristallisation der Fasern am gepressten Abschnitt zu beschleunigen, wo die ersten und zweiten Papierbögen miteinander ohne thermisches Verschmelzen verbunden werden,
Einstellen eines linearen Drucks des Pressens zwischen 2 bis 10 kgf/cm, einer Frequenz der Ultraschallwelle zwischen 50 bis 150 kHz und einer Amplitude der Ultraschallwelle auf 50 bis 150 µm und
Einstellen eines Glanzgrades 75° (JIS P8142) am bindenden Abschnitt auf 1,4 mal oder mehr größer als den eines nicht-bindenden Abschnittes.

5. Verfahren zum Verbinden des Papierbogens nach Anspruch 4, wobei das Verfahren ferner ein Einstellen einer Presskontaktgeschwindigkeit zwischen 50 bis 100 m/Minute aufweist.

## Revendications

1. Une feuille de papier dans laquelle une seconde feuille de papier étant produite en utilisant de la fibre de pâte à papier et n'ayant pas de composant thermiquement fusible est liée à une première feuille de papier produite en utilisant de la fibre de pâte à papier et en n'ayant pas de composant thermiquement fusible, dans laquelle les fibres de la seconde feuille de papier sont fabriquées pour pénétrer mécaniquement entre les fibres de la première feuille de papier en pressant la seconde feuille de papier contre la première feuille de papier et en appliquant des ondes ultrasoniques à la partie pressée afin d'accélérer la cristallisation des fibres sur la partie pressée où la première et la seconde feuilles de papier sont liées ensemble sans fusion thermique et
un degré de brillance mesurée à 75° (JIS P8142) à la partie liée est 1.4 ou plus de fois plus grand que celui de la partie non liée.

2. La feuille de papier selon la revendication 1 dans laquelle un degré de brillance mesurée à 75° (JIS P8142) à la partie liée est 1.81 à 1.99 fois plus grande que celle de la partie non liée.

3. La feuille de papier selon les revendications 1 et 2 dans laquelle la feuille de liaison est du papier toilette, du mouchoir en papier, de l'essuietout, de la serviette en papier.

4. Une méthode de liaison d'une seconde feuille de papier étant produite en utilisant de la fibre de pâte à papier et n'ayant pas de composant thermiquement fusible à une première feuille de papier étant produite en utilisant de la fibre de pâte à papier et n'ayant pas de composant thermiquement fusible,
la méthode comprenant: pressage de la seconde feuille de papier contre la première feuille de papier et application d'onde ultrasonique à la partie pressée pour que les fibres de la seconde feuille de papier pénètre mécaniquement entre les fibres de la première feuille de papier afin d'accélérer la cristallisation des fibres de la partie pressée où les première et les seconde feuilles de papier sont liées ensemble sans fusion thermique,
application d'une pression linéaire de pressage de 2 à 10 kgf/cm, une fréquence d'ultrasons comprise entre 50 et 150 kHz et une amplitude d'onde ultrasonique comprise entre 50 et 150 µm et
application un degré de brillance à 75° (JIS P8142) à la portion liée pour être 1.4 ou plus de fois supérieur à celui de la partie non liée.

5. La méthode de liaison de la feuille de papier selon la revendication 4 le procédé comprenant l'application d'une vitesse de contact de pressage comprise entre de 50 à 100 m/minute.
